(19) Europäisches Patentamt
European Patent Office
Office européen des brevets

(11) EP 4 446 882 A1

(12) EUROPEAN PATENT APPLICATION
published in accordance with Art. 153(4) EPC

(43) Date of publication:
**16.10.2024 Bulletin 2024/42**

(21) Application number: **23746149.6**

(22) Date of filing: **17.01.2023**

(51) International Patent Classification (IPC):
***G06F 9/445*** *(2018.01)*

(52) Cooperative Patent Classification (CPC):
**G06F 9/445**

(86) International application number:
**PCT/CN2023/072691**

(87) International publication number:
**WO 2023/143267 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2022 CN 202210096175**

(71) Applicant: **Huawei Technologies Co., Ltd.**
**Shenzhen, Guangdong 518129 (CN)**

(72) Inventors:
- **ZHU, Yonghe**
  **Shenzhen, Guangdong 518129 (CN)**
- **ZENG, Yu**
  **Shenzhen, Guangdong 518129 (CN)**
- **GENG, Tingting**
  **Shenzhen, Guangdong 518129 (CN)**
- **ZENG, Qinghai**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

# (54) MODEL CONFIGURATION METHOD AND APPARATUS

(57) A model configuration method and an apparatus are provided. The method includes: Operations, administration and maintenance OAM receives a first model request message from a first access network device. The OAM determines a first model based on the first model request message and a first mapping relationship, where the first mapping relationship includes a mapping relationship between a model, a model application scenario, and a model function, or the first mapping relationship includes a mapping relationship between a model, a model performance level, and a model function. The OAM sends information about the first model to the first access network device. According to the method and the apparatus in this application, the first model that matches an application scenario or a performance indicator may be configured for the first access network device, to improve performance and a speed of model inference.

UE
First RAN node
OAM
701: First model request message
702: Determine a first model based on the first model request message and a first mapping relationship
703: Information about the first model
704: Perform model inference based on the first model to obtain prediction information
705: Prediction information
706: Second feedback information
707: First feedback information
708: Update the first model based on the first feedback information
709: Information about an updated model

FIG. 7

EP 4 446 882 A1

## Description

## CROSS-REFERENCE TO RELATED APPLICATION

This application claims priority to Chinese Patent Application No. 202210096175.1, filed with the China National Intellectual Property Administration on January 26, 2022 and entitled "MODEL CONFIGURATION METHOD AND APPARATUS", which is incorporated herein by reference in its entirety.

## TECHNICAL FIELD

This application relates to the field of communication technologies, and in particular, to a model configuration method and an apparatus.

## BACKGROUND

In a wireless communication network, for example, in a mobile communication network, services supported by the network are increasingly diversified, and therefore, requirements that need to be met are increasingly diversified. For example, the network needs to be capable of supporting an ultra-high rate, an ultra-low latency, and/or an ultra-large connection. This feature makes network planning, network configuration, and/or resource scheduling increasingly complex. These new requirements, scenarios, and features bring unprecedented challenges to network planning, operations and maintenance, and efficient operation. To meet this challenge, an artificial intelligence technology may be introduced into the wireless communication network, to implement network intelligence. On this basis, how to configure an artificial intelligence model for an access network device in the network is a problem worth studying.

## SUMMARY

This application provides a model configuration method and an apparatus, to configure, for a first access network device, a first model that matches an application scenario or a performance level, and improve performance and a speed of model prediction.

According to a first aspect, a model configuration method is provided. The method is performed by operations, administration and maintenance OAM, or may be a component (a processor, a chip, or the like) configured in the OAM, or may be a software module, or the like. The method includes:

receiving a first model request message from a first access network device; determining a first model based on the first model request message and a first mapping relationship, where the first mapping relationship includes a mapping relationship between a model, a model application scenario, and a model function, or the first mapping relationship includes a mapping relationship between a model, a model performance level, and a model function; and sending information about the first model to the first access network device. Optionally, the mapping relationship between the model, the model performance level, and the model function may be replaced with a mapping relationship between a model, a model performance indicator, and a model function.

According to the foregoing method, requirements on performance indicators of models that implement a same function are different in different application scenarios. In this application, the OAM stores the first mapping relationship, where the first mapping relationship is the mapping relationship between the model, the model application scenario, and the model function. Based on the mapping relationship, for a same model function, in different application scenarios, a model corresponding to a scenario may be allocated, so that the model meets a requirement on a performance indicator in the scenario corresponding to the model. In comparison with a case in which a same model is for model inference in any scenario, the solutions of this application can improve prediction performance, a prediction speed, and the like. Alternatively, in this application, the OAM establishes the first mapping relationship, where the first mapping relationship is the mapping relationship between the model, the model performance level (or the model performance indicator), and the model function. Because requirements on model performance indicators of models are different in different application scenarios, and there is a correspondence between a model performance indicator and a performance level, the OAM may configure different models for different model performance indicators in different application scenarios based on the first mapping relationship. In comparison with a case in which a same model is for model inference under a model performance indicator in any scenario, the solutions of this application can improve prediction performance, a prediction speed, and the like.

In a possible design, the first model request message indicates a model application scenario and a model function of the first model.

In a possible design, the first model request message indicates a model function and a model performance level of the first model, or indicates a model function and a model performance indicator of the first model.

In a possible design, the information about the first model indicates at least one of the following of the first model: a model index, model structure information, a model parameter, a model input format, a model output format, a model performance indicator, a model application scenario, a model function, or a training parameter.

According to the foregoing method, the OAM sends the information about the first model to the first access network device. The first access network device may determine or restore the first model based on the information about the first model. Optionally, the information about the first model may include the training parameter, and the first access network device may subsequently continue to train the first model based on the training parameter, to meet various requirements on the model.

In a possible design, the method further includes: receiving first feedback information from the first access network device; and updating the first model based on the first feedback information.

In a possible design, the first feedback information indicates actual accuracy of prediction information output by the first model, and the updating the first model based on the feedback information includes: when the actual accuracy of the prediction information output by the first model is less than a threshold, retraining the first model, and updating the first model.

According to the foregoing method, when determining the first model, the first access network device may perform the model inference based on the first model, and an inference result may be referred to as the prediction information. The first feedback information is determined based on the prediction information, where the first feedback information includes the actual accuracy of the prediction information output by the first model, and the first feedback information is fed back to the OAM. The OAM updates the first model based on the first feedback information, to improve accuracy of the inference result of the first model.

In a possible design, the first feedback information indicates a scenario change indication, a model performance level change indication, or a model performance indicator change indication. That the first model is updated based on the first feedback information includes: selecting a second model for a terminal device based on the scenario change indication, the model performance level change indication, or the model performance indicator change indication; and sending information about the second model to the first access network device, where the second model is for updating the first model.

Similar to the foregoing method, a difference is that in this design, when the application scenario, the model performance level, or the model performance indicator changes, the first access network device sends, to the OAM, indication information indicating an application scenario change, a model performance level change, or a model performance indicator change, and the OAM reallocates a model to the first access network device based on a changed application scenario, model performance level, or model performance indicator for the model inference, it can be ensured as much as possible that the model allocated to the first access network device meets a requirement on the application scenario, the model performance level, the model performance indicator.

In a possible design, the method further includes: receiving a second model request message from a second access network device, where the second model request message indicates an index of the first model; determining the first model based on the index of the first model; and sending the information about the first model to the second access network device.

According to a second aspect, a model configuration method is provided. For beneficial effects of the method on a first access network device side corresponding to the first aspect, refer to the first aspect. The method is performed by a first access network device, or may be a component (a processor, a chip, or the like) configured in the first access network device, or may be a software module, or the like. The method includes:

sending a first model request message to operations, administration and maintenance OAM, where the first model request message indicates a model application scenario and a model function of a first model, or the first model request message indicates a model function and a model performance level of a first model, or indicates a model function and a model performance indicator of a first model; and receiving information about the first model from the OAM.

In a possible design, before the sending a first model request message to OAM, the method further includes: determining whether an artificial intelligence AI-based enhanced service needs to be provided.

In a possible design, the information about the first model indicates at least one of the following of the first model: a model index, model structure information, a model parameter, a model input format, a model output format, a model performance indicator, a model application scenario, a model function, or a training parameter.

In a possible design, the method further includes: performing model inference based on the first model to obtain prediction information.

In a possible design, the method further includes: sending the prediction information to a terminal device, where the prediction information includes a prediction result.

In a possible design, the prediction information further includes accuracy of predicting the prediction result.

In a possible design, the method further includes: receiving second feedback information from the terminal device, where the second feedback information indicates actual accuracy of the prediction information.

In a possible design, the method further includes: sending first feedback information to the OAM, where the first feedback information indicates the actual accuracy of the prediction information, an application scenario change indication, a model performance level change indication, or a model performance indicator change indication.

It should be noted that in this application, the first model may provide an artificial intelligence AI or machine learning ML inference service for the terminal device, or provide an AI or ML inference service for the first access network device. When the first model is configured to provide the AI or ML inference service for the terminal device, the method further includes: A first RAN node sends inference information (or referred to as prediction information) of the first model to the terminal device. The terminal device sends second feedback information to the first access network device based on the inference information, where the second feedback information may indicate actual accuracy of the inference information, and the first access network device may directly forward the second feedback information to the OAM. Alternatively, the first access network device obtains the actual accuracy of the inference information based on the second feedback information, and sends, to the OAM, the first feedback information indicating the actual accuracy of the inference information, or the like. The OAM may update the first model based on the actual accuracy of the inference information, to improve inference performance, an inference speed, and the like of the first model.

In a possible design, the method further includes: determining a target cell of the terminal device; and sending an index of the first model to a second access network device corresponding to the target cell.

In a possible design, the method further includes: sending first indication information to the second access network device corresponding to the target cell, where the first indication information indicates type information of input data of the first model.

In a possible design, the method further includes: sending, to the second access network device, historical data information needed for the model inference.

In a possible design, the method further includes: receiving second indication information from the second access network device, where the second indication information indicates at least one of the following: indicates that the terminal is handed over to the target cell, indicates a first access network device to delete the first model, or indicates a first access network device to release a corresponding computing resource; and deleting the first model to release the corresponding computing resource.

According to a third aspect, a model configuration method is provided. For beneficial effects of the method on a first access network device side corresponding to the first aspect, refer to the first aspect. The method is performed by a second access network device, or may be a component (a processor, a chip, or the like) configured in the second access network device, or may be a software module, or the like. The method includes:

receiving an index of a first model from a first access network device; sending a second model request message to operations, maintenance, and administration OAM, where the second model request message indicates the index of the first model; and receiving information about the first model from the OAM.

In a possible design, the information about the first model indicates at least one of the following of the first model: a model index, model structure information, a model parameter, a model input format, a model output format, a model performance indicator, a model application scenario, a model function, or a training parameter.

In a possible design, the method further includes: receiving first indication information from the first access network device, where the first indication information indicates type information of input data of the first model.

In a possible design, the method further includes: receiving historical data information needed for model inference from the first access network device, where in the model inference, the historical data information is for determining the input data of the first model.

In a possible design, the method further includes: sending second indication information to the first access network device, where the second indication information indicates at least one of the following: indicates that a terminal is handed over to a target cell, indicates the first access network device to delete the first model, or indicates the first access network device to release a corresponding computing resource.

According to a fourth aspect, an apparatus is provided. For beneficial effects, refer to the descriptions of the first aspect. The apparatus may be operations, administration and maintenance OAM, or an apparatus configured in the OAM, or an apparatus that can be used in matching with the OAM.

In a design, the apparatus may include units that are in one-to-one correspondence with the methods/operations/steps/actions described in the first aspect. The units may be implemented by using a hardware circuit, software, or a combination of a hardware circuit and software.

For example, the apparatus may include a processing unit and a communication unit, and the processing unit and the communication unit may perform corresponding functions in any design example of the first aspect.

The communication unit is configured to receive a first model request message from a first access network device. The processing unit is configured to determine a first model based on the first model request message and a first mapping relationship, where the first mapping relationship includes a mapping relationship between a model, a model application scenario, and a model function, or the first mapping relationship includes a mapping relationship between a model, a model performance level, and a model function. The communication unit is further configured to send information about the first model to the first access network device. For specific execution processes of the processing unit and the communication unit, refer to the first aspect. Details are not described herein again.

For example, the apparatus includes a memory, configured to implement the method described in the first aspect. The apparatus may further include a memory, configured to store instructions and/or data. The memory is coupled to the processor. When executing the program instructions stored in the memory, the processor can implement the method described in the first aspect. The apparatus may further include a communication interface, and the communication interface is used by the apparatus to communicate with another device. For example, the communication interface may be a transceiver, a circuit, a bus, a module, a pin, or another type of communication interface, and the another device may be a network device and the like. In a possible design, the apparatus includes:

a memory, configured to store program instructions;
a communication interface, configured to receive the first model request message from the first access network device; and
a processor, configured to determine a first model based on the first model request message and a first mapping relationship, where the first mapping relationship includes a mapping relationship between a model, a model application scenario, and a model function, or the first mapping relationship includes a mapping relationship between a model, a model performance level, and a model function, where
the communication interface is further configured to send information about the first model to the first access network device.

For specific execution processes of the communication interface and the processor, refer to the descriptions of the first aspect. Details are not described again.

According to a fifth aspect, an apparatus is provided. For beneficial effects, refer to descriptions of the second aspect. The apparatus may be a first access network device, an apparatus configured in the first access network device, or an apparatus that can be used in matching with the first access network device. In a design, the apparatus may include units that are in one-to-one correspondence with the methods/operations/steps/actions described in the second aspect. The units may be implemented by using a hardware circuit, software, or a combination of a hardware circuit and software.

For example, the apparatus may include a processing unit and a communication unit, and the processing unit and the communication unit may perform corresponding functions in any design example of the second aspect.

The communication unit is configured to send a first model request message to operations, administration and maintenance OAM, where the first model request message indicates a model application scenario and a model function of a first model, or the first model request message indicates a model function and a model performance level of a first model; and receive information about the first model from the OAM. The processing unit is configured to determine the first model based on the information about the first model. For specific execution processes of the processing unit and the communication unit, refer to the second aspect. Details are not described herein again.

For example, the apparatus includes a memory, configured to implement the method described in the second aspect. The apparatus may further include a memory, configured to store instructions and/or data. The memory is coupled to the processor. When executing the program instructions stored in the memory, the processor can implement the method described in the second aspect. The apparatus may further include a communication interface, and the communication interface is used by the apparatus to communicate with another device. For example, the communication interface may be a transceiver, a circuit, a bus, a module, a pin, or another type of communication interface, and the another device may be a terminal and the like. In a possible design, the apparatus includes:

a memory, configured to store program instructions;
a communication interface, configured to send a first model request message to operations, administration and maintenance OAM, where the first model request message indicates a model application scenario and a model function of a first model, or the first model request message indicates a model function and a model performance level of a first model; and receive information about the first model from the OAM; and
a processor, configured to determine the first model based on the information about the first model.

For specific execution processes of the communication interface and the processor, refer to the descriptions of the second aspect. Details are not described again.

According to a sixth aspect, an apparatus is provided. For beneficial effects, refer to descriptions of the third aspect. The apparatus may be a second access network device, an apparatus configured in the second access network device, or an apparatus that can be used in matching with the second access network device. In a design, the apparatus may include units that are in one-to-one correspondence with the methods/operations/steps/actions described in the third aspect. The units may be implemented by using a hardware circuit, software, or a combination of a hardware circuit and software.

For example, the apparatus may include a processing unit and a communication unit, and the processing unit and the communication unit may perform corresponding functions in any design example of the third aspect.

The communication unit is configured to receive an index of a first model from a first access network device; send a second model request message to operations, maintenance, and administration OAM, where the second model request message indicates the index of the first model; and receive information about the first model from the OAM. The processing unit is configured to determine the first model based on the information about the first model. For specific execution processes of the processing unit and the communication unit, refer to the third aspect. Details are not described herein again.

For example, the apparatus includes a memory, configured to implement the method described in the third aspect. The apparatus may further include a memory, configured to store instructions and/or data. The memory is coupled to the processor. When executing the program instructions stored in the memory, the processor can implement the method described in the third aspect. The apparatus may further include a communication interface, and the communication interface is used by the apparatus to communicate with another device. For example, the communication interface may be a transceiver, a circuit, a bus, a module, a pin, or another type of communication interface, and the another device may be a terminal and the like. In a possible design, the apparatus includes:

a memory, configured to store program instructions;
a communication interface, configured to receive an index of a first model from a first access network device; send a second model request message to operations, maintenance, and administration OAM, where the second model request message indicates the index of the first model; and receive information about the first model from the OAM.
a processor, configured to determine the first model based on the information about the first model.

For specific execution processes of the communication interface and the processor, refer to the descriptions of the third aspect. Details are not described again.

According to a seventh aspect, an embodiment of this application further provides a computer-readable storage medium, including instructions. When the instructions are run on a computer, the computer is enabled to perform the method in any one of the first aspect, the second aspect, or the third aspect.

According to an eighth aspect, this application further provides a chip system. The chip system includes a processor, and may further include a memory, configured to implement the method in any one of the first aspect, the second aspect, or the third aspect. The chip system may include a chip, or may include a chip and another discrete component.

According to a ninth aspect, this application further provides a computer program product, including instructions. When the instructions are run on a computer, the computer is enabled to perform the method in any one of the first aspect, the second aspect, or the third aspect.

According to a tenth aspect, this application further provides a system. The system includes the apparatus in the fourth aspect and the apparatus in the fifth aspect; or the apparatus in the fourth aspect, the apparatus in the fifth aspect, and the apparatus in the sixth aspect.

## BRIEF DESCRIPTION OF DRAWINGS

FIG. 1 is a diagram of a communication system according to this application;
FIG. 2 and FIG. 3 are diagrams of model deployment according to this application;
FIG. 4a and FIG. 4b are diagrams of architectures of communication systems according to this application;
FIG. 4c is a diagram of applying an AI model according to this application;
FIG. 5 is a diagram of a neuron according to this application;
FIG. 6 is a diagram of a neural network according to this application;
FIG. 7 and FIG. 8 are schematic flowcharts according to this application; and
FIG. 9 and FIG. 10 are diagrams of structures of apparatuses according to this application.

## DESCRIPTION OF EMBODIMENTS

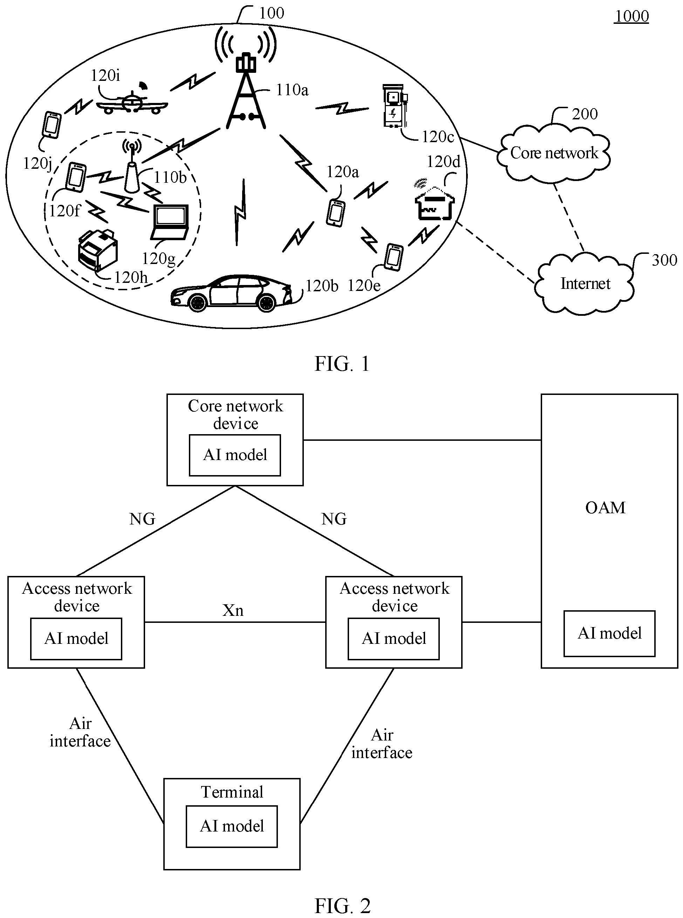

FIG. 1 is a diagram of an architecture of a communication system 1000 to which this application is applied. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is only a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a central unit control plane (CU control plane, CU-CP) module, or a central unit user plane (CU user plane, CU-UP) module, that completes a part of functions of a base station. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement a function of the access network device may be an access network device, or may be an apparatus that can support the access network device in implementing the function, for example, a chip system, a hardware circuit, a software module, or a hardware circuit and a software module. The apparatus may be installed in the access network device or may be used in matching with the access network device. In this application, the chip system may include a chip, or may include a chip and another discrete component. For ease of description, the following describes the technical solutions provided in this application by using an example in which the apparatus configured to implement the functions of the access network device is an access network device and the access network device is a RAN node.

(1) Protocol layer structure

Communication between an access network device and a terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer for transmitting data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user panel, UP) interface may be F 1-U. A specific name of each interface is not limited in this application. The CU and the DU may be divided based on protocol layers of a radio network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU. This is not limited.

The foregoing division into processing functions of the CU and the DU based on the protocol layers is merely an example, and may alternatively be other division. For example, the CU or the DU may be defined to have functions of more protocol layers, and for another example, the CU or the DU may alternatively be defined to have a part of processing functions of the protocol layers. In a design, a part of functions of the RLC layer and functions of protocol layers above the RLC layer are set on the CU, and remaining functions of the RLC layer and functions of protocol layers below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When the PHY layer is for sending, functions of the PHY layer may include at least one of the following functions: addition of cyclic redundancy check (cyclic redundancy check, CRC) code, channel encoding, rate matching, scrambling, modulation, layer mapping, precoding, resource mapping, physical antenna mapping, or radio frequency sending. When the PHY layer is for receiving, functions of the PHY layer may include at least one of the following functions: CRC check, channel decoding, de-rate matching, descrambling, demodulation, layer demapping, channel detection, resource demapping, physical antenna demapping, or radio frequency receiving. The higher-layer function of the PHY layer may include some functions of the PHY layer. For example, the some functions are closer to the MAC layer. The lower-layer function of the PHY layer may include some other functions of the PHY layer. For example, the part of functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding. The lower-layer function of the PHY layer may include resource mapping, physical antenna mapping, and radio frequency sending functions. For example, the higher-layer functions of the PHY layer may include the CRC check, the channel decoding, the de-rate matching, the decoding, the demodulation, and the layer demapping, and the lower-layer functions of the PHY layer may include functions of the channel detection, the resource demapping, the physical antenna demapping, and the radio frequency receiving. Alternatively, the higher-layer functions of the PHY layer may include the CRC check, the channel decoding, the de-rate matching, the decoding, the demodulation, the layer demapping, and the channel detection, and the lower-layer functions of the PHY layer may include functions of the resource demapping, the physical antenna demapping, and the radio frequency receiving.

For example, the functions of the CU may be implemented by one entity, or may be implemented by different entities. For example, the functions of the CU may be further divided. To be specific, a control plane and a user plane that are of the CU are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, the CU-CP, the CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and methods performed by these modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. Methods performed by the modules also fall within the protection scope of this application.

The terminal device may also be referred to as a terminal, user equipment (user equipment, UE), a mobile station, a mobile terminal device, or the like. The terminal device is widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), an internet of things (internet of things, IOT), virtual reality, augmented reality, industrial control, self-driving, telemedicine, a smart grid, smart furniture, smart office, a smart wearable, smart transportation, a smart city, or the like. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in this application.

In this application, an apparatus configured to implement a function of a terminal device may be a terminal device, or may be an apparatus that can support the terminal device in implementing the function, for example, a chip system, a hardware circuit, a software module, or a hardware circuit and a software module. The apparatus may be installed in the terminal device or may be used in matching with the terminal device. For ease of description, the following describes the technical solutions provided in this application by using an example in which the apparatus configured to implement the functions of the terminal device is a terminal device and the terminal device is UE.

The base station and the terminal device may be fixed or movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal device are not limited in this application. The base station and the terminal device may be deployed in a same scenario or different scenarios. For example, the base station and the terminal device are both deployed on the land. Alternatively, the base station is deployed on the land, and the terminal device is deployed on the water. Examples are not described one by one.

Roles of the base station and the terminal device may be relative. For example, a helicopter or an uncrewed aerial vehicle 120i in FIG. 1 may be configured as a mobile base station. For a terminal device 120j that accesses a radio access network 100 through 120i, a terminal device 120i is a base station; while for a base station 110a, 120i is a terminal device, in other words, 110a and 120i communicate with each other based on a radio air interface protocol. 110a and 120i may alternatively communicate with each other based on an interface protocol between base stations. In this case, relative to 110a, 120i is also a base station. Therefore, the base station and the terminal device may be collectively referred to as communication apparatuses, 110a and 110b in FIG. 1 may be referred to as a communication apparatus having functions of a base station, and 120a to 120j in FIG. 1 may be referred to as a communication apparatus having functions of a terminal device.

In this application, an independent network element (for example, referred to as an AI network element or an AI node) may be introduced into the communication system shown in FIG. 1 to implement an AI-related operation. The AI network element may be directly connected to an access network device in the communication system, or may be indirectly connected to an access network device via a third-party network element. The third-party network element may be a core network element such as an authentication management function (authentication management function, AMF) or a user plane function (user plane function, UPF). Alternatively, an AI function, an AI module, or an AI entity may be configured in another network element in the communication system to implement the AI-related operation. For example, the another network element may be an access network device (such as a gNB), a core network device, or operations, administration and maintenance (operations, administration and maintenance, OAM). In this case, a network element that performs the AI-related operation is a network element with a built-in AI function. The OAM is configured to perform operation, management, maintenance, and the like on the access network device and/or the core network device.

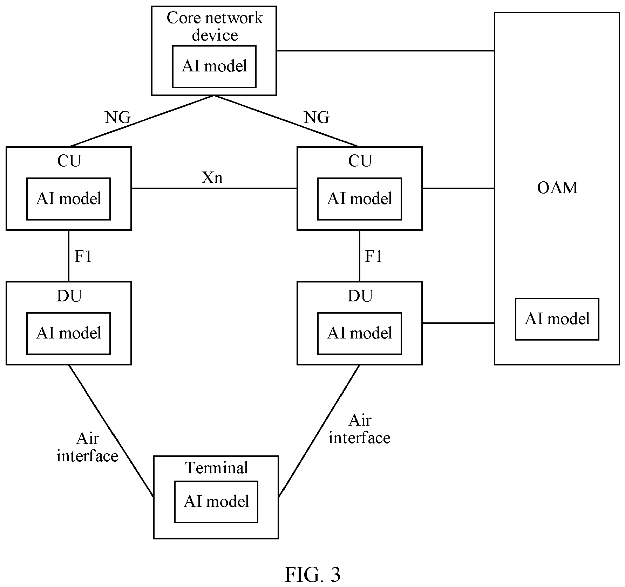

In this application, as shown in FIG. 2 or FIG. 3, an AI model may be deployed on at least one of a core network device, an access network device, a terminal device, OAM, or the like, and a corresponding function is implemented by using the AI model. In this application, AI models deployed on different nodes may be the same or different. The models are different in terms of at least one of the following: different structure parameters of the model, for example, different quantities of layers and/or weights of the model, different input parameters of the model, or different output parameters of the model. Different input parameters of the model and/or different output parameters of the model may be described as different functions of the model. Different from FIG. 2, in FIG. 3, a function of the access network device is separated into a CU and a DU. Optionally, the CU and the DU may be a CU and a DU in an O-RAN architecture. One or more AI models may be deployed in the CU, and/or one or more AI models may be deployed in the DU. Optionally, the CU in FIG. 3 may be further separated into a CU-CP and a CU-UP. Optionally, one or more AI models may be deployed in the CU-CP, and/or one or more AI models may be deployed in the CU-UP. Optionally, in FIG. 2 or FIG. 3, OAM of the access network device and OAM of the core network device may be separately deployed.

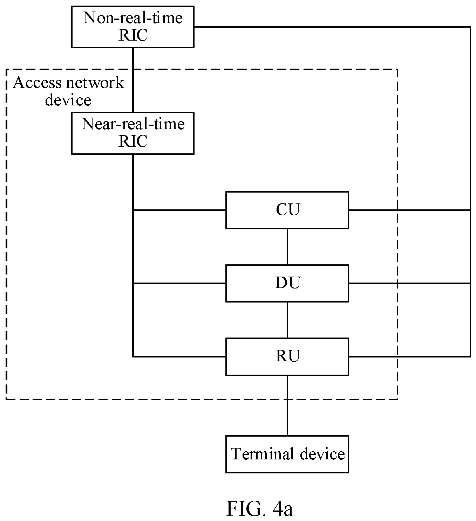

Optionally, FIG. 4a is an architecture of a communication system according to this application. As shown in FIG. 4a, in a first design, an access network device includes a near-real-time access network intelligent control (RAN intelligent controller, RIC) module, configured to perform model training and inference. For example, a near-real-time RIC may be configured to train an AI model and perform the inference by using the AI model. For example, the near-real-time RIC may obtain information of a network side and/or a terminal side from at least one of a CU, a DU, or an RU, and the information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

Alternatively, in a second design, as shown in FIG. 4a, an access network device may include a non-real-time RIC (where optionally, the non-real-time RIC may be located in OAM or a core network device), configured to perform model learning and inference. For example, the non-real-time RIC is configured to train an AI model and perform the inference by using the model. For example, the non-real-time RIC may obtain information of a network side and/or a terminal side from at least one of a CU, a DU, or an RU, and the information may be used as training data or inference data. An inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

Alternatively, in a third design, as shown in FIG. 4a, an access network device includes a near-real-time RIC, and a non-real-time RIC is located outside the access network device (where optionally, the non-real-time RIC may be located in OAM or a core network device). Same as the foregoing second design, the non-real-time RIC may be for model training and inference; and/or same as the first design, the near-real-time RIC may be for model training and inference; and/or the non-real-time RIC performs model training, and the near-real-time RIC may obtain AI model information from the non-real-time RIC, obtain information of a network side and/or terminal side from at least one of a CU, a DU, or an RU, and obtain an inference result by using the information and the AI model information. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A and perform inference by using the model A. For example, the non-real-time RIC is configured to train a model B and perform inference by using the model B. For example, the non-real-time RIC is configured to train a model C and send information about the model C to the near-real-time RIC, and the near-real-time RIC uses the model C for inference.

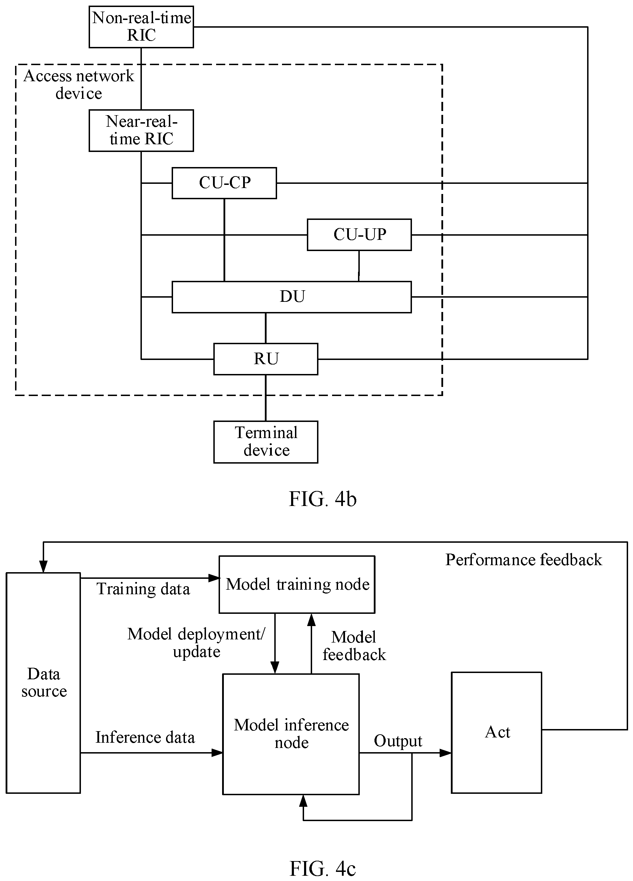

FIG. 4b is a diagram of an architecture of another communication system according to this application. In comparison with FIG. 4a, in FIG. 4b, a CU is separated into a CU-CP and a CU-UP.

The AI model is a specific implementation of the AI function. The AI model represents a mapping relationship between input and output of the model. The AI model may be a neural network, a linear regression model, a decision tree model, a support vector machine (support vector machine, SVM), a Bayesian network, a Q-learning model, another machine learning model, or the like. In this application, the AI function may include at least one of the following: data collection (collecting training data and/or inference data), data preprocessing, model training (or referred to as model learning), model information release (model information configuration), model validation, model inference, or inference result release. The inference may also be referred to as prediction. In this application, the AI model may be referred to as a model for short.

FIG. 4c is a diagram of an application architecture of the AI model. A data source (data source) is configured to store training data and inference data. A model training host (model training host) analyzes or trains training data (training data) provided by the data source to obtain an AI model, and deploys the AI model in a model inference node (model inference host). Optionally, the model training node may further update the AI model that has been deployed on the model inference node. The model inference node may further feed back related information of the deployed model to the model training node, so that the model training node optimizes or updates the deployed AI model, and so on.

Obtaining the AI model through learning by the model training node is equivalent to obtaining the mapping relationship between the input and the output of the model through learning by the model training node by using training data. The model inference node uses the AI model to perform inference based on the inference data provided by the data source and obtain an inference result. The method may also be described as follows: The model inference node inputs the inference data to the AI model, and obtains an output by using the AI model. The output is the inference result. The inference result may indicate a configuration parameter used (acted) by an object of action, and/or an operation acted by an object of action. The inference result may be centrally planned by an actor (actor) entity, and sent to one or more objects of action (for example, network entities) for action. Optionally, the actor entity or the actor object may feed back a parameter or a measurement amount collected by the actor entity or the actor object to the data source. This process may be referred to as performance feedback, and the fed-back parameter may be used as the training data or the inference data. Optionally, the actor entity or the actor object may further determine feedback information related to model performance based on the inference result output by the model inference node, and feed back the feedback information to the model inference node. The model inference node may feed back performance information of the model to the model training node based on the feedback information, so that the model training node optimizes or updates the deployed AI model. This process may be referred to as model feedback.

The AI model may be a neural network or another machine learning model. The neural network is used as an example. The neural network is a specific implementation form of a machine learning technology. According to a universal approximation theorem, the neural network may theoretically approximate to any continuous function, so that the neural network has a capability of learning any mapping. Therefore, the neural network can accurately perform abstract modeling on a complex high-dimensional problem.

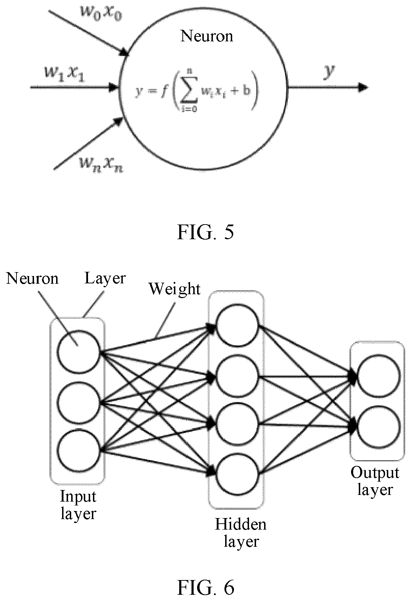

An idea of the neural network is from a neuron structure of brain tissue. Each neuron performs a weighted summation operation on input values of the neuron, and outputs a result of the weighted summation through an activation function. FIG. 5 is a diagram of a structure of a neuron. It is assumed that input values of the neuron are $x = [x_0, x_1, \ldots, x_n]$, weights corresponding to the input values are respectively $w = [w, w_1, \ldots, w_n]$, and a bias of weighted summation is b. Forms of an activation function may be diversified. It is assumed that an activation function of one neuron is $y = f(z) = \max(0, z)$. In this case, output of the neuron is $y = f\left(\sum_{i=0}^{i=n} w_i * x_i + b\right) = \max\left(0, \sum_{i=0}^{i=n} w_i * x_i + b\right)$.

For another example, if an activation function of a neuron is y = f(z) = z, output of the neuron is $y = f\left(\sum_{i=0}^{i=n} w_i * x_i + b\right) = \sum_{i=0}^{i=n} w_i * x_i + b$. $x_i$, $w_i$, and b may be any possible value such as a decimal, an integer (for example, 0, a positive integer, or a negative integer), or a complex number. Activation functions of different neurons in a neural network may be the same or different.

The neural network usually includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 6 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to an intermediate hidden layer, then the hidden layer transfers a calculation result to the output layer or an adjacent hidden layer, and finally, the output layer obtains an output result of the neural network. A neural network may include one hidden layer or a plurality of hidden layers that are sequentially connected. This is not limited. In a training process of the neural network, a loss function may be defined. The loss function describes a gap or difference between an output value of the neural network and an ideal target value of the neural network. A specific form of the loss function is not limited in this application. A training process of the neural network is a process of adjusting a neural network parameter, such as a quantity of layers and a width of the neural network, a weight of a neuron, a parameter in an activation function of the neuron, and/or the like, so that a value of the loss function is less than a threshold or meets a target requirement.

In one solution, a RAN node supports a plurality of AI-assisted cases. For example, mobility enhancement, load balancing, and network energy saving. OAM is configured to train or store an AI model. The RAN node requests the AI model from the OAM and performs inference by using the AI model. How the OAM configures a corresponding model for the RAN node is a problem to be resolved in this application. In the descriptions of this application, the OAM may be replaced with another node that can train or store the AI model, for example, a cloud server, a core network device, or another possible device.

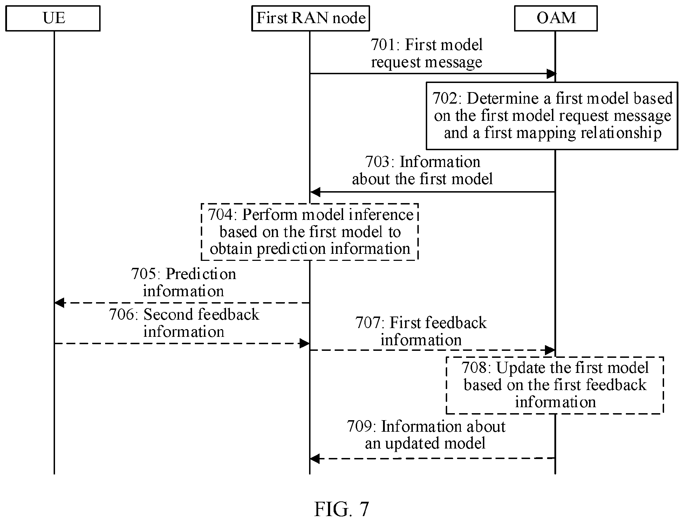

As shown in FIG. 7, a procedure of a model configuration method is provided, and includes at least the following steps.

Step 701: A first RAN node sends a first model request message to OAM, and correspondingly, the OAM receives the first model request message from the first RAN node.

For ease of distinguishing, a model request message sent by the first RAN node to the OAM is referred to as the first model request message. A model request message sent by a second RAN node to the OAM is referred to as a second model request message. The model request message is used by the RAN node to request a model from the OAM, and a name of the model request message is not limited. For example, the first model request message may also be referred to as a first message, and the second model request message may also be referred to as a second message. To distinguish between different RAN nodes, the RAN nodes are referred to as the first RAN node, the second RAN node, and the like. The first RAN node and the second RAN node are different RAN nodes. A relationship between the first RAN node and the second RAN node is not limited.

In a design, the first RAN node may determine a service scenario and a function requirement, and determine the first model request message based on the service scenario and the function requirement. The service scenario and the function requirement are a service scenario and a function requirement of a RAN node. For example, a first model requested by using the first model request message is for model inference related to the RAN node, for example, for cell energy saving. The first RAN node may determine the first model request message and the like based on the service scenario and the function requirement of the RAN node. Alternatively, the service scenario and the function requirement are a service scenario and a function requirement of UE. For example, a first model requested by using the first model request message is for model inference related to the UE, for example, for prediction of a moving trajectory of the UE. The first RAN node may determine the first model request message and the like based on the service scenario and the function requirement of the UE. Alternatively, the first RAN node may determine the first model request message and the like based on a service scenario and a function requirement of a node other than a RAN node and UE. This is not limited. The first RAN node may obtain the service scenario and the function requirement of the UE based on information reported by the UE. For example, the UE is in a self-driving scenario, and sends a quality of service (quality of service, QoS) prediction service request to the RAN node. The RAN node may obtain the service scenario and the function requirement of the UE as self-driving and QoS prediction. Alternatively, the first RAN node may obtain the service scenario and the function requirement of the UE through analysis. For example, the RAN node finds that the UE moves to a cell edge and needs a mobility enhancement service, and the mobility enhancement service needs prediction of trajectory information of the UE, so that the service scenario and the function requirement of the UE are mobility enhancement and prediction of the trajectory information of the UE. Alternatively, the first RAN node may obtain the service scenario and the function requirement of the UE from another device, where the another device includes but is not limited to a minimization of drive tests (minimization of drive tests, MDT) device and the like. Alternatively, the first RAN node stores the service scenario and the function requirement of the UE. For example, when accessing the first RAN node, the UE actively reports the service scenario and the function requirement of the UE to the first RAN node.

In this application, the service scenario includes but is not limited to at least one of the following: mobility enhancement, load balancing, virtual reality (virtual reality, VR), augmented reality (augmented reality, AR), vehicle-to-everything (self-driving), wireless robot cloud control, remote diagnosis with force feedback, a high-definition video (for example, an 8K video), or the like. For example, the mobility enhancement refers to providing an enhanced service for serving cell handover for the moving UE. For example, the RAN node predicts a target cell, handover time, and the like of the UE based on at least one of the moving trajectory, a measurement report, a cell load status, and the like of the UE. The target cell of the UE may refer to a serving cell to which the UE is to be handed over. A moving manner of the UE includes moving on a fixed route, moving on a non-fixed route, and the like. The mobility enhancement may include mobility enhancement for vehicle movement on a fixed route, mobility enhancement for vehicle movement on a non-fixed route, mobility enhancement for a pedestrian scenario, or the like. In the remote diagnosis, which is also referred to as remote consultation, a doctor performs, through a network, diagnosis or surgery on a patient who is at another place. The foregoing force feedback is haptic feedback of a force, and is a service that has a very high requirement on a latency, and a latency prediction service needs to be provided. For example, when a predicted latency exceeds a threshold, an information transmission solution needs to be adjusted or an alarm needs to be provided, to respond to an emergency in advance.

In this application, the function requirement includes but is not limited to at least one of the following: UE trajectory prediction, load prediction, signal to interference plus noise ratio (signal to interference plus noise ratio, SINR) prediction, reference signal received power (reference signal received power, RSRP) prediction, reference signal received quality (reference signal received quality, RSRQ) prediction, latency prediction, QoS prediction, throughput prediction, cell energy saving, or the like.

In a design, after the first RAN node determines the first model request message based on the service scenario and the function requirement, the first model request message indicates the service scenario and the function requirement, in other words, the first model request message indicates a model application scenario, a model function, and the like of the requested first model. The model application scenario corresponds to the foregoing service scenario, and the model function corresponds to the foregoing function requirement. An indication in this application may include an implicit indication, an explicit indication, or the like. This is not limited. For example, the first model request message may include the service scenario, the function requirement, and the like. Alternatively, the first RAN node may directly send the service scenario and the function requirement to the OAM or the like. For example, a combination of the service scenario and the function requirement that are sent by the first RAN node to the OAM may include: a mobility enhancement scenario and trajectory prediction, load balancing and trajectory prediction, self-driving and QoS prediction, VR/AR and QoS prediction, wireless robot cloud control and latency prediction, remote diagnosis with force feedback and latency prediction, and the like.

In another design, a process of determining the first model request message by the first RAN node based on the service scenario and the function requirement includes: The first RAN node determines a model function and a model performance indicator of the requested first model based on the service scenario and the function requirement. The model function corresponds to the foregoing function requirement. The model performance indicator includes at least one of the following: accuracy, a calculation amount, memory occupation, inference duration, or the like. The accuracy is a percentage of a quantity of samples that are correctly predicted to a total quantity of samples. The calculation amount is a quantity of calculation times needed by the model. An overall calculation amount of the model is equal to a sum of calculation amounts of operators in the model, and the calculation amount feeds back a requirement of the model on a hardware calculation unit. Alternatively, the calculation amount may be a size of a computing resource occupied when the model is running. The memory occupation refers to sizes of memory and a video RAM that are occupied when the model is running, or the memory occupation may be referred to as a size of the model or the like. The inference duration refers to duration needed by the model to infer a prediction result. The first model request message sent by the first RAN node to the OAM indicates the model function and the model performance indicator of the first model. For example, the first model request message includes the model function and the model performance indicator. Alternatively, the first RAN node may directly send the model function and the model performance indicator to the OAM. The model function may also be referred to as a model category. For example, the first RAN node learns, through analysis, that a QoS prediction service in the self-driving scenario needs to be provided for the UE, the first RAN node may continue analyzing a performance indicator needed for the QoS prediction service in the self-driving scenario, and the first RAN node sends the QoS prediction service and the corresponding performance indicator to the OAM. Alternatively, the first RAN node determines a model performance level based on the model performance indicator. There is a correspondence between the model performance level and the model performance indicator. For details, refer to the following descriptions. The first model request message sent by the first RAN node to the OAM indicates the model function and model performance level of the requested first model.

Optionally, before step 701, the method may further include: The first RAN node determines whether an AI-based enhanced service needs to be provided. If an AI-based enhanced service needs to be provided, step 701 is performed to send the first model request message to the OAM. If no AI-based enhanced service needs to be provided, the procedure shown in FIG. 7 is not performed. For example, in an AI-based mobility enhancement solution, a source RAN node may predict the target cell of the UE in an AI manner. However, when the UE is not located at the cell edge, the source RAN node does not need to predict the target cell of the UE. In other words, only when the UE is at the cell edge, the source RAN node needs to send the first model request message to the OAM to request a model for predicting the target cell. Alternatively, when the source RAN node predicts the target cell of the UE in the AI manner, input of the model includes the trajectory information of the UE. However, when a trajectory of the UE is very random, accuracy of the target cell predicted in the AI manner may be greatly reduced. In this case, the source RAN node may consider not using the AI manner to predict the target cell of the UE. In this case, the source RAN node does not send the first model request message to the OAM anymore, but predicts the target cell of the UE in a conventional manner.

Step 702: The OAM determines the first model based on the first model request message and a first mapping relationship.

In this application, to distinguish between different models, different models are respectively referred to as the first model, a second model, and the like. The model represents a mapping relationship between the input and an output of the model, and is for implementing a specific function. A name of the model is not limited. For example, the model may also be referred to as an AI model. The AI model may be a neural network, a linear regression model, a decision tree model, an SVM, a Bayesian network, a Q-learning model, or another machine learning model. The first mapping relationship represents a mapping, a correspondence, or the like. The first mapping relationship may also be referred to as a correspondence or the like. Similar cases are not described one by one subsequently.

In this application, the OAM may obtain the first mapping relationship. The first mapping relationship may be established by the OAM or another node. The OAM obtains the first mapping relationship via the another node.

In an example, the first mapping relationship includes a mapping relationship between a model, a model performance level, and a model function, and the model performance level may be referred to as a performance level for short.

For example, there is one-to-many correspondence between the model performance level and the model performance indicator. For example, the model performance indicator for model level classification includes the accuracy, and levels may be classified based on the accuracy. Higher accuracy indicates a higher model performance level. Alternatively, the model performance indicator for model level classification includes the inference duration, and levels may be classified based on the inference duration. Shorter inference duration indicates a higher model performance level. Alternatively, the model performance indicator for model level division includes at least two indicators of the accuracy, the calculation amount, the inference duration, and the memory occupation. For example, a plurality of indicators are weighted in a specific weighting manner to determine a weighted value, and levels are classified based on the weighted value. For models with different functions, manners for model performance level classification are the same or different. For example, model performance levels are classified based on model accuracy for a model for trajectory prediction and a model for SINR prediction. It is assumed that both the model for the trajectory prediction and the model for the SINR prediction include three model performance levels. As shown in Table 1, for the model for the trajectory prediction, accuracy corresponding to a model performance level 1 is [n1, n2], accuracy corresponding to a model performance level 2 is (n2, n3], and accuracy corresponding to a model performance level 3 is (n3, n4], where n4 is greater than or equal to n3, n3 is greater than or equal to n2, and n2 is greater than or equal to n1. As shown in Table 2, for the model for the SINR prediction, accuracy corresponding to a model performance level 1 is [m1, m2], and accuracy corresponding to a model performance level 2 is (m2, m3], where m3 is greater than or equal to m2, and m2 is greater than or equal to m1. For another example, as shown in Table 3, for the model for the SINR prediction, inference duration corresponding to a model performance level 1 is [t1, t2], inference duration corresponding to a model performance level 2 is (t2, t3], and inference duration corresponding to a model performance level 3 is (t3, t4], where t4 is greater than or equal to t3, t3 is greater than or equal to t2, and t2 is greater than or equal to t1.

**Table 1: Correspondence between a model performance level and a model performance indicator**

| Model performance level | Model performance indicator (Accuracy) |
|---|---|
| Model performance level 1 | [n1, n2] |
| Model performance level 2 | (n2, n3] |
| Model performance level 3 | (n3, n4] |

**Table 2: Correspondence between a model performance level and a model performance indicator**

| Model performance level | Model performance indicator (Accuracy) |
|---|---|
| Model performance level 1 | [m1, m2] |
| Model performance level 2 | (m2, m3] |

**Table 3: Correspondence between a model performance level and a model performance indicator**

| Model performance level | Model performance indicator (Inference duration) |
|---|---|
| Model performance level 1 | [t1, t2] |
| Model performance level 2 | (t2, t3] |
| Model performance level 3 | (t3, t4] |

In this design, the first RAN node may obtain the model application scenario, determine a corresponding model performance indicator based on the model application scenario, and determine a model performance level based on the model performance indicator. The first model request message sent to the OAM indicates the model performance level and a model function. The OAM determines a model, referred to as the first model, from the first mapping relationship based on the model performance level and the model function that are indicated by the first model request message. The first mapping relationship includes the mapping relationship between the model, the model performance level, and the model function. Reference may be made to the following descriptions in Table 6.

In an example, the first mapping relationship includes a mapping relationship between a model, a model application scenario, and a model function. For example, the first mapping relationship includes an AI model, a self-driving scenario, and QoS prediction.

For example, the first RAN node may obtain the model application scenario and the model function of the first model. Reference may be made to the descriptions in step 701. The first model request message sent by the first RAN node to the OAM indicates the model application scenario and the model function of the first model. The OAM may determine an AI model from the first mapping relationship based on the application scenario and the model function that are indicated by the first model request message. The AI model is referred to as the first model. For example, as shown in Table 4, the first mapping relationship includes four application scenarios (with indexes 1 to 4) and three model functions (with indexes are 1 to 3). The four application scenarios and the three model functions may form 12 mapping relationships, and indexes of the 12 mapping relationships are 1 to 12. For example, a mapping relationship 1 includes an application scenario 1, a model function 1, and a model 1, and a mapping relationship 2 includes an application scenario 1, a model function 2, and a model 2.

**Table 4: First mapping relationship**

| | Application scenario 1 | Application scenario 2 | Application scenario 3 | Application scenario 4 |
|---|---|---|---|---|
| Model function 1 | 1. Model 1 | 4. Model 4 | 7. Model 7 | 10. Model 10 |
| Model function 2 | 2. Model 2 | 5. Model 5 | 8. Model 8 | 11. Model 11 |
| Model function 3 | 3. Model 3 | 6. Model 6 | 9. Model 9 | 12. Model 12 |

In the first mapping relationship shown in Table 4, for a same model function, corresponding models are different in different scenarios. For example, the model function 1 corresponds to the model 1, the model 4, the model 7, and the model 10 respectively in application scenarios 1 to 4. That the OAM establishes the first mapping relationship shown in Table 4 is used as an example. For a same model function, the OAM may separately collect corresponding training data in different scenarios and train corresponding AI models. For example, the OAM may collect, in the application scenario 1, training data corresponding to the model function 1, and train the model 1 by using the training data, so that the model 1 can meet a performance indicator of the application scenario 1. A training process may be machine learning, non-machine learning, reinforcement learning, or the like. This is not limited.

Alternatively, in this example, there is one-to-one correspondence between the model performance level and the model performance indicator, each model performance level corresponds to a unique model performance indicator, and each model performance indicator corresponds to a unique model performance level. For example, as shown in Table 5, model performance levels 1 to 3 correspond to model performance indicators 1 to 3 respectively. That the model performance indicator includes the accuracy, the calculation amount, the inference duration, and the memory occupation is used as an example. A model performance level 1 corresponds to a model performance indicator 1, where correspondingly, accuracy is at least 99%, a calculation amount is up to 3%, inference duration is up to 1s, and memory occupation is up to 500 KB.

**Table 5: Correspondence between a model performance level and a model performance indicator**

| Model performance level | Model performance indicator | Accuracy | Calculation amount | Inference duration | Memory occupation |
|---|---|---|---|---|---|
| Model performance level 1 | Model performance indicator 1 | At least 99% | Up to 3% | Up to 1s | Up to 500 KB |
| Model performance level 2 | Model performance indicator 2 | At least 90% | Up to 5% | Up to 2s | Up to 1 MB |
| Model performance level 3 | Model performance indicator 3 | At least 80% | Up to 5% | Up to 10s | Up to 1 MB |

In this example, the first RAN node may obtain the model performance indicator of the requested model, and the first model request message sent to the OAM indicates a model function and the model performance indicator of the requested model. When receiving the first model request message, the OAM may determine a model performance level based on the model performance indicator indicated by the first model request message. Alternatively, the first RAN node may determine the model performance level based on the model performance indicator, and the first model request message sent to the OAM indicates a model function and the model performance level. The OAM determines a model from the first mapping relationship based on the model function and the model performance level, where the model is referred to as the first model or the like. For example, as shown in Table 6, the first mapping relationship includes 12 mapping relationships with indexes 1 to 12. For example, a mapping relationship 1 includes a model 1, a model performance level 1, and a model function 1, and a mapping relationship 2 includes a model 2, a model performance level 1, and a model function 2.

**Table 6: First mapping relationship**

| | Model performance Level 1 | Model performance Level 2 | Model performance Level 3 | Model performance Level 4 |
|---|---|---|---|---|
| Model function 1 | 1. Model 1 | 4. Model 4 | 7. Model 7 | 10. Model 10 |
| Model function 2 | 2. Model 2 | 5. Model 5 | 8. Model 8 | 11. Model 11 |
| Model function 3 | 3. Model 3 | 6. Model 6 | 9. Model 9 | 12. Model 12 |

It should be noted that in the foregoing example in which there is the one-to-one correspondence between the model performance level and the model performance indicator, the model performance level in the foregoing first mapping relationship may be replaced with the model performance indicator. Alternatively, in this application, the first mapping relationship may be established based on the model performance indicator. For example, the first mapping relationship includes a mapping relationship between a model, a model performance indicator, and a model function. In this design, the first model request message indicates the model function and the model performance indicator of the first model. The OAM determines a model from the first mapping relationship based on the model function and the model performance indicator that are indicated by the first model request message. The model may be referred to as the first model. For example, as shown in Table 7, the first mapping relationship includes 12 mapping relationships with indexes 1 to 12. For example, a mapping relationship 1 includes a model 1, a model performance indicator 1, and a model function 1, and a mapping relationship 2 includes a model 2, a model performance indicator 1, and a model function 2.

**Table 7: First mapping relationship**

| | Model performance Indicator 1 | Model performance Indicator 2 | Model performance Indicator 3 | Model performance Indicator 4 |
|---|---|---|---|---|
| Model function 1 | 1. Model 1 | 4. Model 4 | 7. Model 7 | 10. Model 10 |
| Model function 2 | 2. Model 2 | 5. Model 5 | 8. Model 8 | 11. Model 11 |
| Model function 3 | 3. Model 3 | 6. Model 6 | 9. Model 9 | 12. Model 12 |

In the first mapping relationship shown in Table 6 or Table 7, models corresponding to a same model function are different under different model performance levels or model performance indicators. For example, reference is made to Table 6 or Table 7. For the model function 1, models corresponding to model performance levels 1 to 4 or model performance indicators 1 to 4 are the model 1, the model 4, the model 7, and the model 10 respectively. That the OAM establishes the first mapping relationship shown in Table 6 or Table 7 is used as an example. The OAM may separately collect corresponding training data under different model performance levels or model performance indicators, and train corresponding models. For example, the OAM may collect training data corresponding to the model function 1 under the model performance level 1 or the model performance indicator 1, and train the model 1.

As described above, the model performance indicator includes at least one of the following: the accuracy, the calculation amount, the memory occupation, the inference duration, or the like. In different scenarios, a same model function may have different requirements on model performance indicators. Optionally, the calculation amount in the model performance indicator is also referred to as computing resource occupation, and the memory occupation is also referred to as a model size. In a possible case, as shown in Table 8, in a VR/AR scenario and a V2X scenario, requirements on performance indicators of a model in QoS prediction are different. In another possible case, as shown in Table 9, in scenarios such as a vehicle on a fixed route, a vehicle on a non-fixed route, and a pedestrian scenario, requirements on performance indicators of a model in trajectory prediction are different.

**Table 8: QoS prediction function in different scenarios**

| | Accuracy | Computing resource occupation | Inference duration | Model size |
|---|---|---|---|---|
| **VR/AR** | At least 90% | Up to 3% | Up to 1s | Up to 500 KB |
| **V2X** | At least 99% | Up to 5% | Up to 10 ms | Up to 1 MB |

**Table 9: Trajectory prediction function in different scenarios**

| Mobility enhancement | Accuracy | Computing resource occupation | Inference duration | Model size |
|---|---|---|---|---|
| Vehicle on a non-fixed route | At least 90% | Up to 5% | Up to 2s | Up to 1 MB |
| Vehicle on a fixed route | At least 99% | Up to 3% | Up to 1s | Up to 500 KB |
| Pedestrian scenario | At least 80% | Up to 5% | Up to 10s | Up to 1 MB |

In different scenarios, requirements on performance indicators of a model of a same function may be different. If a same model is for inference for a function in any scenario, it is difficult to meet a requirement on a performance indicator of a corresponding scenario. For example, in Table 8, for the AR/VR scenario and the V2X scenario, if a same model in QoS prediction is for model inference, it is difficult to meet a requirement on a performance indicator of each scenario. In the solution of this application, reference may be made to the first mapping relationship shown in Table 4 above. For a same model function, different models may be configured in different scenarios. For example, in the VR/AR scenario, a model is configured for the QoS prediction. In the V2X scenario, another model is configured for the QoS prediction. Alternatively, reference may be made to the mapping relationship shown in Table 6 above. Models with corresponding performance levels may be configured for requirements on performance indicators in different scenarios. Alternatively, reference may be made to the mapping relationship shown in Table 7 above, different models may be configured for different performance indicators, so that each model meets a requirement on a performance indicator of a corresponding application scenario.

Step 703: The OAM sends information about the first model to the first RAN node.

In this application, the information about the first model indicates at least one of the following of the first model: a model index (index), model structure information, a model parameter, a model input format, a model output format, an input data processing manner, an output data processing manner, a model performance indicator, a model application scenario, a model function, a training parameter, or the like.

The model index is for distinguishing between different models. The model structure information, the model parameter, the model input format, the model output format, and the like are used by the first RAN node to determine the first model. In other words, the first RAN node determines the first model based on the model structure information, the model parameter, the model input format, the model output format, and the like. The model structure information includes at least one of the following: a quantity of layers included in the model (also referred to as a depth of the model), a network type of each layer (for example, a fully connected layer network, a convolutional layer network, or a long short-term memory (long short-term memory, LSTM) layer), a quantity of neurons included in each layer (also referred to as a width of the model), a connection relationship between layers, or the like. The model parameter may include at least one of the following: a weight of a neuron, an activation function of a neuron, an offset in an activation function, or the like. The model input format and output format may be formats that need to be met by input data and output data when model training or inference is performed on the model. The foregoing input data processing manner includes a manner of preprocessing raw data before the collected raw data is input into the model. For example, an imaginary part is separated from a real part of the raw data, normalization processing on the raw data is performed, or a phase and an amplitude of the raw data are separated. The foregoing output data processing manner includes a manner of processing the output data when the model outputs the data, for example, intercepting the output data. For the model performance indicator, the model application scenario, and the model function, refer to the foregoing descriptions. In this application, when determining the first model based on information such as a model structure, the model parameter, the model input format, and the model output format, the first RAN node may further continue to train the first model based on the foregoing training parameter. The training parameter may include indication information of a loss function and the like. For example, the first RAN node may obtain training data. The training data may be from the first RAN node, or from the UE, or from both the first RAN node and the UE, or from another node. The first RAN node trains the first model based on the training data. For example, the training data is input into the first model. A value of the loss function is determined based on output of the first model. If the value of the loss function is less than a threshold or meets a target requirement, training on the first model ends. If the value of the loss function is no less than the threshold or does not meet the target requirement, a parameter of the first model is updated, and training on the first model continues. That a parameter of the first model is updated may include updating at least one of the following information of the first model: a quantity of layers of a neural network, a width of a neural network, the connection relationship between the layers, the weight of the neuron, the activation function of the neuron, the offset in the activation function, or the like. A training process may be label learning, non-label learning, reinforcement learning, or the like. This is not limited. When the first model is trained, an initial model of the first model may be indicated by the information about the first model, or may be randomly generated, or may be agreed in a protocol. This is not limited.

Alternatively, the information about the first model indicates at least one of the following of the first model: a model, a model usage description, or a model index. The model includes a network architecture, a parameter weight, a training hyperparameter, an optimizer (optimizer), a batch size (batch size), a learning rate (learning rate), momentum (momentum), and the like. Optionally, the first RAN node may perform online training or the like based on the training hyperparameter. The model usage description includes at least one of a model input/output format, a model performance indicator, a model application scenario, and a model function. The model index is a number of the model, used to distinguish between different models, and the like.

During actual application, requirements on performance indicators of models that implement a same function are different in different application scenarios. For example, as shown in Table 8 or Table 9 above, for the QoS prediction and the trajectory prediction, requirements on performance indicators of models are different in different scenarios. In this application, the OAM establishes the first mapping relationship, where the first mapping relationship is the mapping relationship between the model, the model application scenario, and the model function. Based on the mapping relationship, for a same model function, in different application scenarios, a model corresponding to a scenario may be configured, so that the model meets a requirement on a performance indicator in the scenario corresponding to the model. In comparison with a case in which a same model is for model inference in any scenario, the solutions of this application can improve prediction performance, a prediction speed, and the like. Alternatively, in this application, the OAM establishes the first mapping relationship, where the first mapping relationship is the mapping relationship between the model, the model performance level, and the model function, or the first mapping relationship is the mapping relationship between the model, the model performance indicator, and the model function. Because requirements on performance indicators of models are different in different application scenarios, and there is a correspondence between a model performance indicator and a model performance level, the OAM may configure different models for different requirements on model performance indicators in different application scenarios based on the first mapping relationship. In comparison with a case in which a same model is for model inference under a model performance indicator in any scenario, the solutions of this application can improve prediction performance, a prediction speed, and the like.

Optionally, in addition to step 701 to step 703, the procedure shown in FIG. 7 may further include the following steps.

Step 704: The first RAN node performs the model inference based on the first model to obtain prediction information.

For example, the first RAN node may collect the input data, allocate a computing resource, a memory resource, and the like for the model inference. The input data may be from the first RAN node and/or the UE, or from another node, or the like. This is not limited. Optionally, the first RAN node may collect the input data based on the model usage description. The input data is input into the first model, and is output as the prediction information. Alternatively, the input data is processed, and processed input data is input into the first model; and/or output data of the first model is processed, and processed output data is the prediction information. It may be understood that the input data and the output data meet requirements on an input format and an output format of the first model. The prediction information includes a prediction result. For example, when a model training node such as the OAM trains a model, the model training node classifies a collected data set into a training set, a validation set, and a test set. The model training node performs model training by using the training set, to obtain the model, and this process may be referred to as the model training. The model is verified by using the validation set, and this process may be referred to as model verification. The model verification is usually performed during the model training. For example, each time the model is trained for one or more epochs (epochs), the validation set may be used to verify a current model, to monitor a model training status, for example, to verify whether the current model is underfitted, overfitted, or has been converged, and determine whether to end the training. Optionally, in a model verification process, a hyperparameter of the model may be further adjusted. The hyperparameter may refer to at least one of the following parameters of the model: a quantity of layers of a neural network, a quantity of neurons, an activation function, a loss function, or the like. The model is tested by using the test set, and this process may be referred to as a model test. For example, after the model training is completed, the test set is for testing a trained model. For example, a generalization capability of the model is evaluated, whether the model meets a requirement is determined, whether the model is available is determined, or prediction accuracy of the model is obtained. In this application, the information that is about the first model and that is sent by the OAM to the first RAN node may further include the prediction accuracy and the like. Alternatively, when determining the first model, the first RAN node may test the first model by using locally collected test data, to obtain the prediction accuracy and the like. In addition to the prediction result inferred by the first model, optionally, the prediction information sent by the first RAN node to the UE may further include the prediction accuracy. For example, in the trajectory prediction, the prediction information sent by the first RAN node to the UE includes predicted trajectory information of the UE and accuracy (for example, 98%) of the predicted trajectory information.

In this application, if the prediction information is prediction information related to the first RAN node, the first RAN node determines first feedback information based on the prediction information. For example, the first RAN performs a corresponding action based on the prediction information. For example, in a network energy saving scenario, the prediction information is an energy saving policy, for example, carrier shutdown, symbol shutdown, cell shutdown, or deep sleep. After the first RAN node infers the energy saving policy by using the first model, the first RAN node may execute the energy saving policy. The first RAN node determines the first feedback information based on a change between performance (for example, a change between cell throughputs or QoS of the UE) before and after the prediction information is executed. Alternatively, the prediction information is prediction information related to the UE, and the first RAN node needs to send the prediction information to the UE. The UE determines second feedback information based on the prediction information. For example, the UE may determine the second feedback information based on a performance change that is after the prediction information is executed. For example, in a mobility enhancement scenario, the prediction information is a target cell to which the UE is to be handed over, handover time, and the like. The UE may perform a corresponding action based on the prediction information, and determine the second feedback information based on the performance change that is after the prediction information is executed. Alternatively, the UE compares the prediction information with actual information, to determine second feedback information. For example, in a trajectory prediction scenario, the UE may compare a predicted moving trajectory of the UE with an actual moving trajectory of the UE, to determine the second feedback information. The UE sends the second feedback information to the first RAN node. The first RAN node sends the first feedback information to the OAM based on the received second feedback information, the OAM updates the first model based on the first feedback information, and the like. For details, refer to descriptions of a first design in the following step 705 and step 706. Alternatively, when determining that an application scenario changes or a performance level (or a performance indicator) of a required model changes, the first RAN node may alternatively send, to the OAM, the first feedback information indicating that the scenario changes or the performance level changes. The OAM may reconfigure a model for the first RAN node based on a scenario change indication or a performance level change indication. The model may be referred to as a second model or the like. For example, when the UE changes from a walking scenario to a scenario in which a vehicle drives on a fixed route, the first RAN node predicts, by using a model in trajectory prediction requested in the walking scenario, a moving trajectory in the scenario in which the vehicle drives on the fixed route, and consequently, a decrease in prediction accuracy may be caused. In this application, when finding that a scenario of the UE changes, the first RAN node may indicate a scenario change to the OAM or the like, and the OAM may configure, for the first RAN node, a model that matches the current scenario, or the like. The foregoing scenario change indication or the performance level change indication may be discovered by the first RAN node by analyzing the UE, or may be reported by the UE to the first RAN node. For details, refer to descriptions of a second design in step 706. Alternatively, the first model is a model related to the first RAN node, and the first RAN may determine, by analyzing the first RAN, that the application scenario changes, the performance level changes, or the like.

Step 705: The first RAN node sends the prediction information to the UE. Correspondingly, the UE receives the prediction information from the first RAN node.

Step 706: The UE sends the second feedback information to the first RAN node. Correspondingly, the first RAN node receives the second feedback information from the UE.

In the first design, when receiving the prediction information, the UE may compare the prediction information sent by the first RAN node with the actual information, to determine accuracy of the prediction information. The accuracy is referred to as actual accuracy of the prediction information. For example, the prediction information is trajectory information. The UE may compare the predicted trajectory information with actual trajectory information of the UE, to determine the actual accuracy of the prediction information, and send the second feedback information to the first RAN node, where the second feedback information indicates the actual accuracy of the prediction information. The indication may be an implicit indication, an explicit indication, or the like. In other words, the UE sends the actual accuracy of the prediction information to the first RAN node. For example, the UE may feed back actual accuracy of prediction information in a period of time to the first RAN node, where the feedback may periodic feedback, feedback based on event triggering, or the like. For example, the UE may use 10 seconds as a periodicity, calculate the actual accuracy of the prediction information every 10 seconds, and feed back the actual accuracy to the first RAN node. Alternatively, the UE also calculates the accuracy of the prediction information every 10 seconds. When the accuracy is less than a threshold (for example, 80%), the UE sends the actual accuracy of the prediction information to the first RAN node.

In the second design, when finding that the application scenario of the UE changes or the performance level of the UE changes, the UE may alternatively send the second feedback information to the first RAN node. The second feedback information indicates that the application scenario changes or the performance level changes. In other words, the UE sends an application scenario change indication, the performance level change indication, or the like to the first RAN node.

Step 707: The first RAN node sends the first feedback information to the OAM. Correspondingly, the OAM receives the first feedback information from the first RAN node.

In a design, the first RAN node may send the first feedback information to the OAM periodically, or based on event triggering, or the like. The first feedback information may implicitly or explicitly indicate the actual accuracy of the prediction information. In other words, the first RAN node sends the actual accuracy of the prediction information to the OAM. Similar to the foregoing step 706, the first RAN node may feed back the actual accuracy of the prediction information in a period of time to the OAM. For example, the first RAN node may feed back the actual accuracy of the prediction information in a period of time to the OAM periodically, based on event triggering, or the like.

In another design, when an application scenario or a performance level related to the first model changes, the first RAN node sends the first feedback information to the OAM. The first feedback information indicates that the application scenario changes or the performance level changes. In other words, the first RAN node sends the application scenario change indication, the performance level change indication, or the like to the OAM.

Step 708: The OAM updates the first model based on the first feedback information.

In a design, when the first feedback information indicates the actual accuracy of the prediction information output by the first model, that the OAM updates the first model based on the first feedback information includes: When the actual accuracy of the prediction information output by the first model is less than a threshold, the first model is retrained, and the first model is updated. For example, the OAM may collect training data, where the training data is from the first RAN node and/or the UE, another node, or the like. The OAM may retrain the first model by using the collected training data. For a model training process, refer to the foregoing descriptions.

In another design, the first feedback information indicates a scenario change indication, a model performance level change indication, or a model performance indicator change indication. That the OAM updates the first model based on the first feedback information includes: A second model is determined based on the scenario change indication, the model performance level change indication, or the model performance indicator change indication. For example, the first mapping relationship includes a mapping relationship between a model, a model application scenario, and a model function, and the OAM may determine a changed scenario based on the indicated scenario change indication. A model corresponding to the changed scenario is determined based on the foregoing first mapping relationship, and is referred to as the second model. Alternatively, the first mapping relationship includes a mapping relationship between a model, a model performance level, and a model function, and the OAM may determine a changed model performance level based on the indicated model performance level change indication. Alternatively, the OAM may determine a changed model performance level based on the indicated model performance indicator change indication. A model corresponding to the changed model performance level is determined based on the foregoing mapping relationship, and is referred to as the second model. Alternatively, the first mapping relationship includes a mapping relationship between a model, a model performance indicator, and a model function. The OAM determines a model corresponding to an indicated changed model performance indicator based on the first mapping relationship, and the model is referred to as the second model.

Step 709: The OAM sends information about an updated model to the first RAN node. Correspondingly, the first RAN node receives the information about the updated model from the OAM.

For content included in the information about the updated model, refer to the content included in the information about the first model in the foregoing step 703. Details are not described herein again.

In this application, the first RAN node may send the first feedback information to the OAM periodically, based on event triggering, or the like. The OAM evaluates, based on the first feedback information, whether the first model needs to be updated, to update the first model in a timely manner, and improve prediction performance and a prediction speed of the first model.

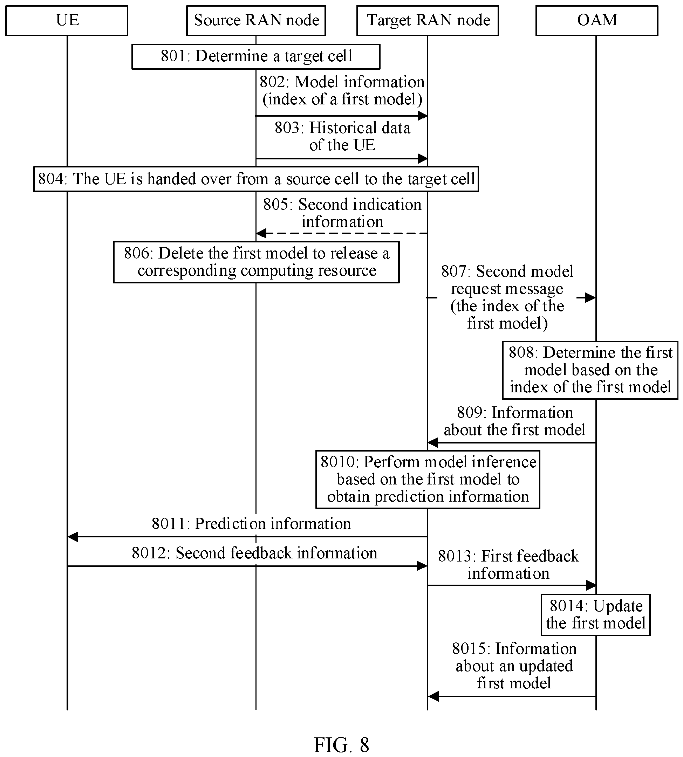

After the first model is configured for the first RAN node by using the method in the procedure in FIG. 7, as shown in FIG. 8, this application provides a cell handover flowchart. In this procedure, a first RAN node is referred to as a source RAN node, a second RAN node is referred to as a target RAN node, and the procedure includes at least the following steps.

Step 801: The source RAN node determines a target cell.

In a design, the source RAN node may receive a measurement report reported by UE, where the measurement report includes identification information of the cell, quality information of the cell, and the like. The cell may be a current serving cell, a neighboring cell, and/or the like. This is not limited. In a design, the UE may periodically report the measurement report to the source RAN node. For example, the UE may periodically measure signal quality of a serving cell and/or signal quality of a neighboring cell, and then periodically report measured information to the source RAN node. Alternatively, the UE may periodically measure signal quality of a serving cell and/or signal quality of a neighboring cell, and report measured information or the like to the source RAN node when a specific condition is met.

In this application, the measurement report includes identification information of the cell. The identification information of the cell may include at least one of a cell global identifier (cell global identifier, CGI), a physical cell identifier (physical cell identifier, PCI) and a frequency, a cell identity (cell identity, cell ID), a non-public network identifier (non-public network identifier, NPN ID), a non-terrestrial network identifier (non-terrestrial network identifier, NTN ID), another cell identity, or the like of the cell. The CGI may include a public land mobile network (public land mobile network, PLMN ID), a cell ID, and the like. Optionally, the identification information of the cell may further include a tracking area code (tracking area code, TAC) and/or identification information of a network device to which the cell belongs, for example, a global network device identifier.

In this application, the measurement report includes signal quality information of the cell. For example, the UE may obtain the quality information of the cell by measuring at least one of a downlink synchronization channel, a channel state information reference signal, a demodulation reference signal (demodulation reference signal, DMRS), a cell-specific reference signal (cell-specific reference signal, CRS), a synchronization signal block (synchronization signal block, SSB), a synchronization signal/physical broadcast channel block, or another downlink signal. For example, the quality information of the cell may include at least one of received signal code power (received signal code power, RSCP), reference signal received power (reference signal received power, RSRP), reference signal received quality (reference signal received quality, RSRQ), a signal noise ratio (signal noise ratio, SNR), a signal to interference plus noise ratio (signal to interference plus noise ratio, SINR), a reference signal strength indication (reference signal strength indication, RSSI), or other signal quality.

Optionally, the quality information of the cell may be at least one of a cell level, a beam level, a synchronization signal/physical broadcast channel block (synchronization signal/physical broadcast channel block, SS/PBCH Block) level, a channel state information reference signal (channel state information reference signal, CSI-RS) level, a numerology (numerology) level, a slicing (slicing) level, or a bandwidth part (bandwidth part, BWP) level. A level of the quality information of the cell is a granularity at which the quality information of the cell is measured. For example, the quality information of the cell being at the cell level means that the UE measures each cell in a plurality of to-be-measured cells, to obtain quality of each cell. Alternatively, the quality of the cell being at the beam level means that the cell includes at least one beam, and the UE obtains the quality information of the cell by measuring a beam in the cell. For example, a cell includes three beams, and the UE may separately measure a beam 1, a beam 2, and a beam 3 in the three beams, to obtain quality information of the beam 1 and quality information of the beam 2 that meet a beam quality condition. Optionally, the UE may then obtain, for example, a larger value, an average, or a weighted summation based on the quality information of the beam 1 and the quality information of the beam 2, to obtain the quality information of the cell. Alternatively, the UE may report both the quality information of the beam 1 and the quality information of the beam 2. The quality information of the cell measured by the UE at another granularity is similar to the foregoing, and is not described again.

It should be noted that, if the cell quality information is the beam level, the SS/PBCH block level, the CSI-RS level, the air interface technology level, the slicing level, the BWP level, or the like, the identification information of the cell further includes at least one of identification information of a corresponding beam, identification information of an SS/PBCH block, identification information of a CSI-RS, identification information of an air interface technology, identification information of a slice, identification information of a BWP, or the like.

In a design, when receiving the measurement report, the source RAN node may determine, based on the measurement report, whether a serving cell needs to be handed over for the UE. For example, if quality of service of a source cell is lower than a specific threshold, it may be determined that the serving cell needs to be handed over for the UE. The source RAN node may select the target cell for the UE based on the received measurement report. For example, a cell whose signal quality is greater than the threshold and whose signal quality is the best may be selected from neighboring cells of the UE as the target cell.

In another design, the source RAN node may determine the target cell in an AI manner. The source RAN node may predict the target cell by using an AI model or a machine learning (machine learning, ML) model. Input data of the AI model or the ML model includes at least one of the following: the measurement report of the UE, historical and/or real-time load of the neighboring cell, historical trajectory information of the UE, geographical coordinates of the UE at a current moment, a moving direction of the UE at a current moment, a moving speed of the UE, or the like. Output data of the AI model or the ML model includes at least one of the following: the target cell of the UE, a handover timestamp, and the like.

Step 802: The source RAN node sends model information to the target RAN node corresponding to the target cell.

In a design, the source RAN node may send the model information to the target RAN node, where the model information includes an index of a first model. Optionally, the model information may further include at least one of the following: an application scenario of the first model, a function of the first model, data that needs to be collected by the first model for model inference, or the like. For example, in an AI-based mobility enhancement solution, a RAN node that performs the model inference needs to request a historical handover success or failure case of the UE from a RAN node that the UE previously accesses. In this application, a process in which the source RAN node needs to notify the target RAN node of data that needs to be collected for the model inference may be further described as follows: The RAN node sends first indication information to the target RAN node, where the first indication information indicates type information of the input data of the first model. In this process, the source RAN node may notify the target RAN node in advance of the data that needs to be collected for the model inference in a model inference process, so that the target source RAN prepares for the model inference, to improve model inference efficiency.

Step 803: The source RAN node sends historical information of the UE to the target RAN node, where the historical information includes at least historical data, historical information, and/or the like collected by the source RAN node from the UE.

In a design, the historical information of the UE may be information needed for performing the model inference by using the first model or the like. In other words, when the target RAN node performs the model inference by using the first model, the historical information may be used as a part of the input data of the first model. The foregoing process may be further described as follows: The source RAN node sends historical data information needed for the model inference to the target RAN node, where the historical data information is for determining the input data of the first model. For example, the target RAN node may directly use the historical data as input of the first model to perform the model inference; or the target RAN node may process the historical data, and use processed historical data as input of the first model. This is not limited.

It should be noted that step 803 may be performed after step 802, or may be performed after step 804. This is not limited. In the procedure in FIG. 8, an example in which the procedure is performed after step 802 is used for description. For example, if the target cell is determined in the AI manner, step 803 may be performed after step 802. Alternatively, if the target cell is determined in a non-AI manner, step 803 may be performed after step 804. In this application, a sequence of steps in all the procedures is not limited.

Step 804: The UE is handed over from the source cell corresponding to the source RAN node to the target cell corresponding to the target RAN node. After handover, the target cell serves as the serving cell of the UE.

Step 805: The target RAN node sends second indication information to the source RAN node, where the second indication information indicates at least one of the following: indicates that the UE is handed over to the target cell, indicates the source RAN node to delete the first model, or indicates the source RAN node to release a corresponding computing resource.

For example, the source RAN node allocates 1% of the resource to the UE for the model inference. After the UE is handed over to the target cell, the source RAN node may release the 1% of the computing resource allocated to the UE, delete the first model, and the like.

Step 806: The source RAN node deletes the first model to release the corresponding computing resource.

Step 807: The target RAN node sends a second model request message to OAM, where the second model request message indicates the index of the first model.

Step 808: The OAM may determine the first model based on the index of the first model.

In this application, there is a mapping relationship between the index of the first model and the first model. The OAM may determine the first model based on the index of the first model.

Step 809: The OAM sends information about the first model to the target RAN node.

Step 8010: The target RAN node performs the model inference based on the first model to obtain prediction information.

Step 8011: The target RAN node sends the prediction information to the UE.

Step 8012: The UE sends second feedback information to the target RAN node.

Step 8013: The target RAN node sends first feedback information to the OAM.

Step 8014: The OAM updates the first model.

Step 8015: The OAM sends information about an updated first model to the target RAN node.

For a specific performing process of steps 809 to 8015, refer to the descriptions in FIG. 7.

In this application, when the UE performs cell handover, the source RAN node sends the index of the first model to the target RAN node, to ensure continuity of an AI service. In addition, after the UE is successfully handed over, the target RAN node notifies the source RAN node to delete model-related information to release the computing resource, so that memory resource occupation and computing resource occupation of the RAN node can be reduced.

It may be understood that, to implement functions in the foregoing methods, the OAM and the RAN node include corresponding hardware structures and/or software modules for performing the functions. A person skilled in the art should be easily aware that, with reference to units and method steps in the examples described in this application, this application can be implemented by hardware or a combination of hardware and computer software. Whether a function is performed in a form of hardware or hardware driven by computer software depends on particular application scenarios and design constraints of the technical solutions.

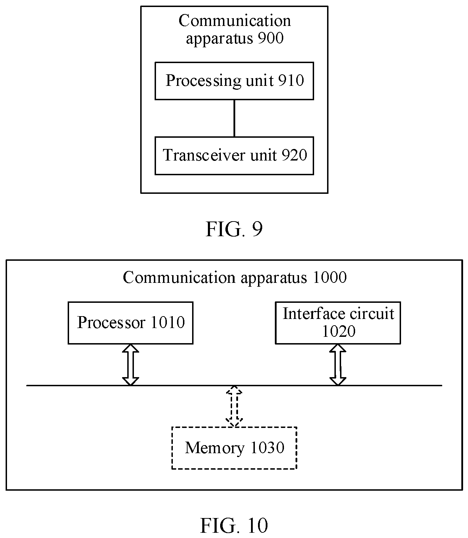

FIG. 9 and FIG. 10 are diagrams of structures of possible apparatuses according to this application. These communication apparatuses may be configured to implement functions of the OAM or the RAN node in the foregoing methods, and therefore can also implement beneficial effect of the foregoing methods.

As shown in FIG. 9, a communication apparatus 900 includes a processing unit 910 and a transceiver unit 920. The communication apparatus 900 is configured to implement functions of the OAM, the source RAN node, or the target RAN node in the method shown in FIG. 7 or FIG. 8.

When the communication apparatus 900 is configured to implement a function of the OAM in the method shown in FIG. 7 or FIG. 8, the transceiver unit 920 is configured to receive a first model request message from a first access network device. The processing unit 910 is configured to determine a first model based on the first model request message and a first mapping relationship, where the first mapping relationship includes a mapping relationship between a model, a model application scenario, and a model function; or the first mapping relationship includes a mapping relationship between a model, a model performance level, and a model function. The transceiver unit 920 is further configured to send information about the first model to the first access network device.

When the communication apparatus 900 is configured to implement a function of the first RAN node or the source RAN node in the method shown in FIG. 7 or FIG. 8, the transceiver unit 920 is configured to send a first model request message to operations, administration and maintenance OAM, where the first model request message indicates a model application scenario and a model function of a first model, or the first model request message indicates a model function and a model performance level of a first model. The transceiver unit is further configured to receive information about the first model from the OAM.

When the communication apparatus 900 is configured to implement a function of the target RAN node in the method shown in FIG. 8, the transceiver unit 920 is configured to receive an index of a first model from a first access network device and send a second model request message to operations, maintenance, and administration OAM. The second model request message indicates the index of the first model and receive information about the first model from the OAM.

For more detailed descriptions of the processing unit 910 and the transceiver unit 920, directly refer to the related descriptions of the method shown in FIG. 5, FIG. 7, or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver, an input/output interface, a pin, or the like. Optionally, the communication apparatus 1000 may further include a memory 1030, configured to store instructions executed by the processor 1010, or store input data needed by the processor 1010 to run the instructions, or store data generated after the processor 1010 runs the instructions.

When the communication apparatus 1000 is configured to implement the foregoing method, the processor 1010 is configured to implement the functions of the processing unit 910, and the interface circuit 1020 is configured to implement the functions of the transceiver unit 920.

When the communication apparatus is a module used in the OAM, the module in the OAM implements the functions of the OAM in the foregoing method. The module in the OAM receives information from another module (for example, a radio frequency module or an antenna) in the OAM, where the information is sent by the RAN node to the OAM; or the module in the OAM sends information to another module (for example, a radio frequency module or an antenna) in the OAM, where the information is sent by the OAM to the RAN node. The module in the OAM herein may be an OAM baseband chip, or may be another module and the like.

When the communication apparatus is a module used in the RAN node, the module in the RAN node implements functions of the RAN node in the foregoing method. The module in the RAN node receives information from another module (for example, a radio frequency module or an antenna) in the RAN node, where the information is sent by a terminal to the RAN node; or the module in the RAN node sends information to another module (for example, a radio frequency module or an antenna) in the RAN node, where the information is sent by the RAN node to a terminal. The module in the RAN node herein may be a RAN node baseband chip, or may be a DU or another module. The DU herein may be a DU in an open radio access network (open radio access network, O-RAN) architecture.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any regular processor.

The memory in this application may be a random access memory, a flash memory, a read-only memory, a programmable read-only memory, an erasable programmable read-only memory, an electrically erasable programmable read-only memory, a register, a hard disk drive, a removable hard disk drive, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the methods in this application may be implemented by software, hardware, firmware, or any combination thereof. When software is for implementing embodiments, all or a part of embodiments may be implemented in a form of a computer program product. The computer program product includes one or more computer programs or instructions. When the computer programs or instructions are loaded and executed on the computer, the procedure or functions according to this application are completely or partially executed. The computer may be a general-purpose computer, a dedicated computer, a computer network, a network device, user equipment, a core network device, OAM, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" indicates an "or" relationship between associated objects. In a formula in this application, the character "/" indicates a "division" relationship between associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. Serial numbers of the foregoing processes do not mean an execution sequence, and the execution sequence of the processes needs to be determined based on functions and internal logic of the processes.

## Claims

**1.** A model configuration method, comprising:

receiving a first model request message from a first access network device;
determining a first model based on the first model request message and a first mapping relationship, wherein the first mapping relationship comprises a mapping relationship between a model, a model application scenario, and a model function, or the first mapping relationship comprises a mapping relationship between a model, a model performance level, and a model function; and
sending information about the first model to the first access network device.

**2.** The method according to claim 1, wherein the first model request message indicates a model application scenario and a model function of the first model.

**3.** The method according to claim 1, wherein the first model request message indicates a model function and a model performance level of the first model, or indicates a model function and a model performance indicator of the first model.

**4.** The method according to any one of claims 1 to 3, wherein the information about the first model indicates at least one of the following of the first model:
a model index, model structure information, a model parameter, a model input format, a model output format, a model performance indicator, a model application scenario, a model function, or a training parameter.

**5.** The method according to any one of claims 1 to 4, further comprising:

receiving first feedback information from the first access network device; and
updating the first model based on the first feedback information.

**6.** The method according to claim 5, wherein the first feedback information indicates actual accuracy of prediction information output by the first model, and the updating the first model based on the feedback information comprises: when the actual accuracy of the prediction information output by the first model is less than a threshold, retraining the first model, and updating the first model.

**7.** The method according to claim 5, wherein the first feedback information indicates a scenario change indication, a model performance level change indication, or a model performance indicator change indication, and the updating the first model based on the first feedback information comprises:

selecting a second model for a terminal device based on the scenario change indication, the model performance level change indication, or the model performance indicator change indication; and
sending information about the second model to the first access network device, wherein the second model is for updating the first model.

**8.** The method according to any one of claims 1 to 7, further comprising:

receiving a second model request message from a second access network device, wherein the second model request message indicates an index of the first model;
determining the first model based on the index of the first model; and

sending the information about the first model to the second access network device.

**9.** A model configuration method, comprising:

sending a first model request message to operations, administration and maintenance OAM, wherein the first model request message indicates a model application scenario and a model function of a first model, or the first model request message indicates a model function and a model performance level of a first model, or indicates a model function and a model performance indicator of a first model; and
receiving information about the first model from the OAM.

**10.** The method according to claim 9, wherein before the sending a first model request message to OAM, the method further comprises:
determining whether an artificial intelligence AI-based enhanced service needs to be provided.

**11.** The method according to claim 9 or 10, wherein the information about the first model indicates at least one of the following of the first model:
a model index, model structure information, a model parameter, a model input format, a model output format, a model performance indicator, a model application scenario, a model function, or a training parameter.

**12.** The method according to any one of claims 9 to 11, further comprising:
performing model inference based on the first model to obtain prediction information.

**13.** The method according to claim 12, further comprising:
sending the prediction information to a terminal device, wherein the prediction information comprises a prediction result.

**14.** The method according to claim 12 or 13, wherein the prediction information further comprises accuracy of predicting the prediction result.

**15.** The method according to claim 13 or 14, further comprising:
receiving second feedback information from the terminal device, wherein the second feedback information indicates actual accuracy of the prediction information.

**16.** The method according to any one of claims 9 to 15, further comprising:
sending first feedback information to the OAM, wherein the first feedback information indicates the actual accuracy of the prediction information, an application scenario change indication, a model performance level change indication, or a model performance indicator change indication.

**17.** The method according to any one of claims 9 to 16, further comprising:

determining a target cell of the terminal device; and
sending an index of the first model to a second access network device corresponding to the target cell.

**18.** The method according to claim 17, further comprising:
sending first indication information to the second access network device corresponding to the target cell, wherein the first indication information indicates type information of input data of the first model.

**19.** The method according to claim 17 or 18, further comprising:
sending, to the second access network device, historical data information needed for the model inference.

**20.** The method according to any one of claims 17 to 19, further comprising:

receiving second indication information from the second access network device, wherein the second indication information indicates at least one of the following: indicates that the terminal is handed over to the target cell, indicates a first access network device to delete the first model, or indicates a first access network device to release a corresponding computing resource; and
deleting the first model to release the corresponding computing resource.

**21.** A model configuration method, comprising:

receiving an index of a first model from a first access network device;
sending a second model request message to operations, administration and maintenance OAM, wherein the second model request message indicates the index of the first model; and
receiving information about the first model from the OAM.

**22.** The method according to claim 21, wherein the information about the first model indicates at least one of the following of the first model:
a model index, model structure information, a model parameter, a model input format, a model output format, a model performance indicator, a model application scenario, a model function, or a training parameter.

**23.** The method according to claim 21 or 22, further comprising:
receiving first indication information from the first access network device, wherein the first indication information indicates type information of input data of the first model.

**24.** The method according to any one of claims 21 to 23, further comprising:

receiving historical data information needed for model inference from the first access network device; and
in the model inference, the historical data information is for determining the input data of the first model.

**25.** The method according to any one of claims 21 to 24, further comprising:
sending second indication information to the first access network device, wherein the second indication information indicates at least one of the following: indicates that a terminal is handed over to a target cell, indicates the first access network device to delete the first model, or indicates the first access network device to release a corresponding computing resource.

**26.** A communication apparatus, comprising a unit configured to implement the method according to any one of claims 1 to 8.

**27.** A communication apparatus, comprising a processor and a memory, wherein the processor is coupled to the memory, and the processor is configured to implement the method according to any one of claims 1 to 8.

**28.** A communication apparatus, comprising a unit configured to implement the method according to any one of claims 9 to 20.

**29.** A communication apparatus, comprising a processor and a memory, wherein the processor is coupled to the memory, and the processor is configured to implement the method according to any one of claims 9 to 20.

**30.** A communication apparatus, comprising a unit configured to implement the method according to any one of claims 21 to 25.

**31.** A communication apparatus, comprising a processor and a memory, wherein the processor is coupled to the memory, and the processor is configured to implement the method according to any one of claims 21 to 25.

**32.** A communication system, comprising the communication apparatus according to claim 26 or 27, the communication apparatus according to claim 28 or 29, and the communication apparatus according to claim 30 or 31.

**33.** A computer-readable storage medium, wherein the computer-readable storage medium stores instructions; and when the instructions are run on a computer, the computer is enabled to perform the method according to any one of claims 1 to 8, or the method according to any one of claims 9 to 20, or the method according to any one of claims 21 to 25.

**34.** A computer program product, comprising instructions, wherein when the instructions are run on a computer, the computer is enabled to perform the method according to any one of claims 1 to 8, or the method according to any one of claims 9 to 20, or the method according to any one of claims 21 to 25.

100
1000
120i
110a
120c
200
Core network
120j
110b
120a
120d
120f
120g
120h
120b
120e
300
Internet

FIG. 1

Core network device
AI model
OAM
NG
NG
Access network device
AI model
Xn
Access network device
AI model
AI model
Air interface
Air interface
Terminal
AI model

FIG. 2

Core network device
AI model
NG
NG
CU
AI model
Xn
CU
AI model
OAM
F1
F1
DU
AI model
DU
AI model
AI model
Air interface
Air interface
Terminal
AI model

FIG. 3

Non-real-time RIC
Access network device
Near-real-time RIC
CU
DU
RU
Terminal device

FIG. 4a

Non-real-time RIC
Access network device
Near-real-time RIC
CU-CP
CU-UP
DU
RU
Terminal device

FIG. 4b

Performance feedback
Training data
Model training node
Model deployment/ update
Model feedback
Data source
Inference data
Model inference node
Output
Act

FIG. 4c

$w_0 x_0$
Neuron
$w_1 x_1$
$y = f\left(\sum_{i=0}^{n} w_i x_i + b\right)$
$y$
$w_n x_n$

FIG. 5

Neuron
Layer
Weight
Input layer
Hidden layer
Output layer

FIG. 6

UE
First RAN node
OAM
701: First model request message
702: Determine a first model based on the first model request message and a first mapping relationship
703: Information about the first model
704: Perform model inference based on the first model to obtain prediction information
705: Prediction information
706: Second feedback information
707: First feedback information
708: Update the first model based on the first feedback information
709: Information about an updated model

FIG. 7

UE
Source RAN node
Target RAN node
OAM
801: Determine a target cell
802: Model information (index of a first model)
803: Historical data of the UE
804: The UE is handed over from a source cell to the target cell
805: Second indication information
806: Delete the first model to release a corresponding computing resource
807: Second model request message (the index of the first model)
808: Determine the first model based on the index of the first model
809: Information about the first model
8010: Perform model inference based on the first model to obtain prediction information
8011: Prediction information
8012: Second feedback information
8013: First feedback information
8014: Update the first model
8015: Information about an updated first model

FIG. 8

Communication apparatus 900
Processing unit 910
Transceiver unit 920

FIG. 9

Communication apparatus 1000
Processor 1010
Interface circuit 1020
Memory 1030

FIG. 10

**INTERNATIONAL SEARCH REPORT**

International application No. **PCT/CN2023/072691**

**A. CLASSIFICATION OF SUBJECT MATTER**

G06F9/445(2018.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, CNABS, DWPI, CNKI: 模型, 映射, 关系, 场景, 性能, 功能, 等级, 索引, 参数, 阈值, 更新; model, map, relationship, scenario, performance, function, level, grade, index, parameter, threshold, update

**C. DOCUMENTS CONSIDERED TO BE RELEVANT**

| Category* | Citation of document, with indication, where appropriate, of the relevant passages | Relevant to claim No. |
|---|---|---|
| Y | CN 106663224 A (AMAZON TECHNOLOGIES, INC.) 10 May 2017 (2017-05-10) description, paragraphs 128-129 | 1-34 |
| Y | CN 101146312 A (ZTE CORP.) 19 March 2008 (2008-03-19) description, pages 8-13 | 1-34 |
| A | CN 113839797 A (HUAWEI TECHNOLOGIES CO., LTD.) 24 December 2021 (2021-12-24) entire document | 1-34 |
| A | CN 113747462 A (HUAWEI TECHNOLOGIES CO., LTD.) 03 December 2021 (2021-12-03) entire document | 1-34 |
| A | EP 2627038 A1 (ALCATEL LUCENT) 14 August 2013 (2013-08-14) entire document | 1-34 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 February 2023** | **13 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2023/072691**

| Patent document cited in search report | Publication date (day/month/year) | Patent family member(s) | Publication date (day/month/year) |
|---|---|---|---|
| CN 106663224 A | 10 May 2017 | US 2015379072 A1 | 31 December 2015 |
| | | WO 2016004063 A1 | 07 January 2016 |
| | | WO 2016004073 A1 | 07 January 2016 |
| | | WO 2016004075 A1 | 07 January 2016 |
| | | CN 106575246 A | 19 April 2017 |
| | | CN 106663038 A | 10 May 2017 |
| | | IN 201717002597 A | 09 June 2017 |
| | | IN 201717002981 A | 16 June 2017 |
| | | CN 106575246 A8 | 07 July 2017 |
| | | CN 106663038 A8 | 11 July 2017 |
| | | CN 106663224 A8 | 11 July 2017 |
| | | JP 2017527008 W | 14 September 2017 |
| | | JP 6419859 B2 | 07 November 2018 |
| | | JP 6445055 B2 | 26 December 2018 |
| | | CN 106663038 B | 27 October 2020 |
| | | CN 106575246 B | 01 January 2021 |
| | | CN 106663224 B | 09 February 2021 |
| | | US 11100420 B2 | 24 August 2021 |
| CN 101146312 A | 19 March 2008 | CN 101146312 B | 29 September 2010 |
| CN 113839797 A | 24 December 2021 | WO 2021258986 A1 | 30 December 2021 |
| | | CN 113839797 B | 25 November 2022 |
| CN 113747462 A | 03 December 2021 | WO 2021244334 A1 | 09 December 2021 |
| EP 2627038 A1 | 14 August 2013 | IN 418 DE2012A | 05 June 2015 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210096175